# EUROPEAN PATENT SPECIFICATION

(11) **EP 0 537 986 B1**
(45) Date of publication and mention of the grant of the patent: **24.05.1995**
(21) Application number: 92309329.8
(22) Date of filing: 13.10.1992
(51) Int. Cl.: F02B 19/08

(54) **Swirl chamber structure of a diesel engine**
Wirbelkammer für eine Dieselbrennkraftmaschine
Chambre à tourbillon pour un moteur diesel

(30) Priority: 18.10.1991 JP 297603/91
(43) Date of publication of application: 21.04.1993
(73) Proprietor: TOYOTA JIDOSHA KABUSHIKI KAISHA, Aichi-ken 471 (JP)
(72) Inventor: Shibata, Masahito, c/o Toyota Jidosha K.K., Toyota-shi, Aichi-ken, 471 (JP)
(74) Representative: Ben-Nathan, Laurence Albert

(56) References cited:
- DE-C- 806 071
- GB-A- 625 946
- GB-A- 777 970
- GB-A- 786 329
- GB-A- 1 159 356
- GB-A- 2 010 391
- GB-A- 2 129 053
- US-A- 4 545 344
- MOTORTECHNISCHE ZEITSCHRIFT vol. 31, no. 9, 1 September 1970, STUTTGART pages 394 - 399 BROSINSKY 'Werkstoffauswahl für Brennkammern in Dieselmotoren'

## Description

The present invention relates to a swirl chamber structure of a diesel engine enabling smooth flow of fuel from a swirl chamber to a main chamber.

A combustion chamber structure having a main chamber and a swirl chamber is known from, for example, Japanese Patent Publication SHO 59-201922 to which corresponds US-A-4 545 344. In this type of combustion chamber, a concave recess is formed in a cylinder head of a diesel engine and a lower chamber insert is inserted into the concave recess to define a swirl chamber between the cylinder head and the lower chamber insert. The lower chamber insert has a connecting hole formed therein for connecting the swirl chamber to a main chamber positioned below the cylinder head. A fuel injection nozzle is installed in the cylinder head so as to inject fuel into the swirl chamber. When a piston moves upward, air flows from the main chamber to the swirl chamber through the connecting hole to generate a swirling flow in the swirl chamber. Fuel is injected from the fuel injection nozzle into the swirl chamber and is effectively atomized by the swirling flow so that it is sufficiently mixed with air. The fuel/air mixture is adiabatically compressed and ignites in the swirl chamber. Then the flame flows from the swirl chamber into the main chamber through the connecting hole in the expansion stroke of the engine so that the fuel is completely burned helped by the sufficient amount of air in the main chamber.

A portion of the fuel injected from the fuel injection nozzle into the swirl chamber rides on the swirling flow generated in the swirl chamber, and the remaining portion of the fuel penetrates the swirling flow to collide with the surface of the lower chamber insert and spreads over that surface. In the swirl chamber structure of the above-described Publication SHO 59-201922, as illustrated in FIG. 12, the fuel having penetrated the swirling flow and having adhered to the surface of the bottom wall of the lower chamber insert, is pushed by the swirling flow to spread to almost all portions of the upper surface 12 of the bottom wall of the lower chamber insert to finally flow into the connecting hole 4. FIG. 12 illustrates how the fuel spreads every 0.5 millisecond. As seen from FIG. 12, a portion of the adhering fuel flows around the connecting hole to the rear thereof and then turns towards the connecting hole 4 finally to flow into the connecting hole 4.

However, in the swirl chamber structure of Publication SHO 59-201922, since the swirl flow operates to prevent fuel which has flown to the rear of the connecting hole from flowing towards the connecting hole, the fuel is delayed in flowing into the main chamber through the connecting hole, so that the combustion period is prolonged and the fuel economy of the engine becomes worse.

DE-C-806071 illustrates a cylinder head for a diesel engine having a swirl chamber with a groove formed in its lower wall and leading to a connecting hole between the swirl chamber and the main combustion chamber. A fuel injection nozzle is directed towards the inside surface of the swirl chamber so that the geometric axis of reflection thereat is downstream of the injection axis with respect to the direction of the swirling flow.

GB-A-1,159,356 illustrates a cylinder head having the features of the preamble of Claim 1.

An object of the present invention is to enable fuel injected from a fuel injection nozzle and adhering to an inside surface of a lower chamber insert, to flow smoothly through a connecting hole formed in a bottom wall of the lower chamber insert into a main combustion chamber whereby the fuel economy characteristic of the engine is improved.

The invention provides a cylinder head of a diesel engine in accordance with Claim 1.

In the above-described swirl chamber structure of a diesel engine, since the groove has side surfaces, the fuel which has been injected from the fuel injection nozzle and has adhered to the groove bottom surface, is guided by those groove side surfaces and is prevented from flowing around the connecting hole to a rear thereof. No fuel is caused to flow in a direction opposite to the direction of the swirling flow. As a result, all of the fuel adhering to the groove bottom surface flows towards the connecting hole as it is pushed by the swirling flow, so that it can flow smoothly into the connecting hole.

Further, due to the inclination of the inside surface of the lower chamber insert where it is intersected by the fuel injection axis, the inertial force of the injected fuel gives the adhering fuel a biasing force in the direction towards the connecting hole. As a result, the adhering fuel can flow smoothly into the connecting hole biased by this inertial force and also pushed by the swirling flow. Since the fuel will not stay on the inside surface of the lower chamber insert, all the fuel can flow quickly into the main chamber through the connecting hole, so that combustion within the main chamber is promoted and the fuel economy of the engine is improved.

The above-described object and other objects, features, and advantages of the present invention will become more apparent and will be more readily appreciated from the following detailed description of the preferred embodiment of the invention taken in conjunction with the accompanying drawings, in which:
FIG. 1 is a cross-sectional view of a swirl chamber structure of a diesel engine in accordance with any embodiment of the present invention;
FIG. 2 is an enlarged plan view of a swirl chamber structure of a diesel engine in accordance with a first embodiment of the present invention;
FIG. 3 is a cross-sectional view taken along line 2-2 of FIG. 2;
FIG. 4 is an enlarged plan view of a swirl chamber structure of a diesel engine in accordance with a second embodiment of the present invention;
FIG. 5 is a cross-sectional view taken along line 5-5 of FIG. 4;
FIG. 6 is a cross-sectional view taken along line 6-6 of FIG. 4;
FIG. 7 is an enlarged plan view of a swirl chamber structure of a diesel engine in accordance with a third embodiment of the present invention;
FIG. 8 is a cross-sectional view taken along line 8-8 of FIG. 7;
FIG. 9 is a cross-sectional view of a swirl chamber structure of a fourth embodiment of the present invention;
FIG. 10 is a graph illustrating a heat generation rate versus crank angle characteristic of the swirl chamber structure of a diesel engine in accordance with various embodiments of the present invention;
FIG. 11 is a graph illustrating a change in the ratio of a fuel flowing to a main chamber with respect to the total amount of injected fuel against elapsed time; and
FIG. 12 is a plan view of a prior art swirl chamber structure of a diesel engine illustrating how fuel spreads therein over a period of time.

Swirl chamber structures of a diesel engine in accordance with a plurality of embodiments of the present invention will be explained.

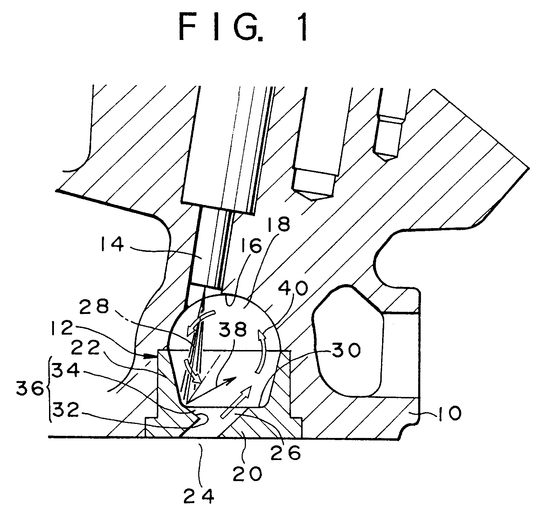

First, structures common to all the embodiments of the invention will be explained. As illustrated in FIG. 1, a swirl chamber structure of a diesel engine of the invention includes a cylinder head 10, a lower chamber insert 12, and a fuel injection nozzle 14. A downwardly open concave recess 16 is formed in a lower surface of the cylinder head 10. A lower chamber insert 12 is inserted into the concave recess 16 of the cylinder head 10 so as to define a swirl chamber 18 between the cylinder head 10 and the lower chamber insert 12. The lower chamber insert 12 has a bottom wall 20 and a side wall 22 extending upwardly from a peripheral portion of the bottom wall 20. The bottom wall 20 is circular and the side wall 22 is generally cylindrical. A connecting hole 26 is formed in the bottom wall 20. The connecting hole 26 extends obliquely and penetrates the bottom wall 20 to connect the swirl chamber 18 to a main chamber defined below the cylinder head 10. A fuel injection nozzle 14 is mounted in the cylinder head 10 and has an injection axis 28 which is directed towards an inside surface 30 of the lower chamber insert 12.

A groove 36 is formed in the lower chamber insert 12 and extends downwardly from the inside surface 30 thereof. The groove 36 extends from a position in the vicinity of the intersection between the injection axis 28 and the inside surface 30 of the lower chamber insert 12, to the connecting hole 26. The groove 36 has a bottom surface 32 extending obliquely downwardly towards the connecting hole 26 and side surfaces 34 extending upwardly from opposite side edges of the groove bottom surface 32. The groove side surfaces 34 function as fuel diffusion preventing surfaces. The groove bottom surface 32 is positioned below the upper surface of the bottom wall 20 of the lower chamber insert 12. The reason for providing the groove side surfaces 34 is to prevent fuel from flowing around the connecting hole 26 to the rear thereof.

The inclination of the inside surface 30 of the lower chamber insert 12, where it is intersected by the injection axis 28, is such that a geometric axis of reflection 38 at that position is located downstream of the injection axis 28 with respect to a direction of the swirl flow 40 generated in the swirl chamber 18. This ensures that fuel which is injected from the fuel injection nozzle 14 and collides with the inside surface 30 of the lower chamber insert 12, is directed towards the connecting hole 26 by the inertial force of the injected fuel.

The intersection between the groove bottom surface 32 and the inside surface of the connecting hole 26 is left as a sharp angle without any rounding thereof. This enables air flowing from the main chamber 24, as a result of upward movement of an associated piston, through the connecting hole 26 into the swirl chamber 18 to suck a portion of the fuel flowing on the upper surface of the bottom wall of the lower chamber insert 12 and atomize it.

Next, structures specific to each embodiment will be explained. In the following, reference numbers for members having different structures between respective embodiments are denoted with different suffixes A, B, C, and D corresponding to first, second, third, and fourth embodiments.

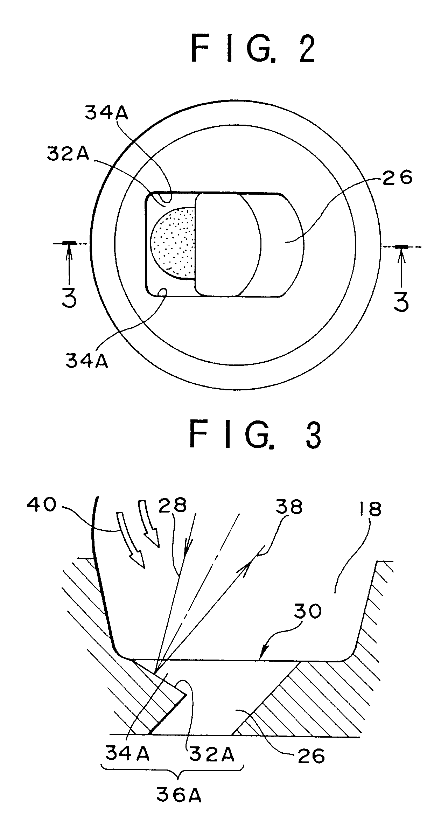

In a first embodiment, as illustrated in FIGS. 2 and 3, a groove 36A has a groove bottom surface 32A which is flat and extends straight towards the connecting hole 26. Groove side surfaces 34A extend vertically and upwardly from opposite side edges of the groove bottom surface 32A to the upper surface of the bottom wall of the lower chamber insert. The groove side surfaces 34A are parallel to each other. The connecting hole 26 has side surfaces at opposite sides of the connecting hole 26. The groove side surfaces 34A and the hole side surfaces are in the same planes. The injection axis 28 of the fuel injection nozzle 14 is directed towards the bottom surface 32A of the groove 36A. Since the injected fuel has a cylindrical or conic flow pattern, the injected fuel collides with the groove bottom surface 32A over a specific area (see dotted portion of FIG. 2). However, the distance between the groove side surfaces 34A is determined so that the fuel collision area is necessarily defined between those side surfaces 34A.

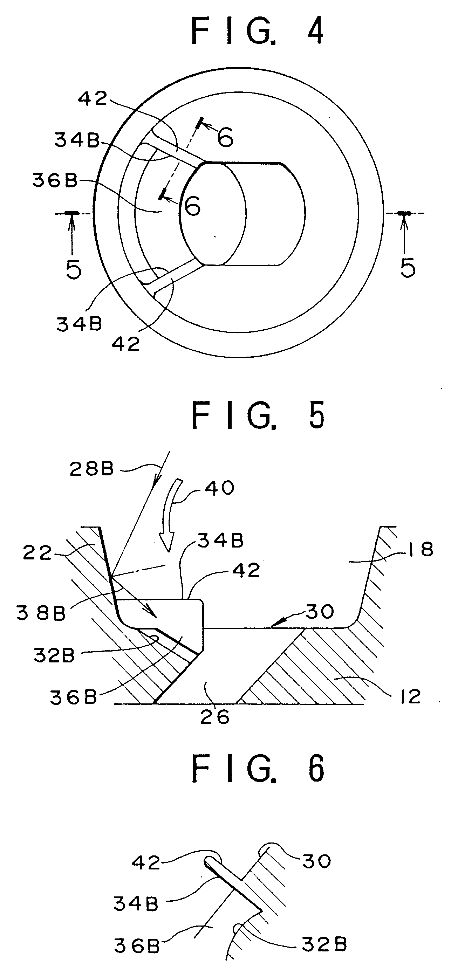

In a second embodiment, as illustrated in FIGS. 4-6, a groove 36B has a bottom surface 32B and side surfaces 34B. The groove bottom surface 32B is convex as viewed from a direction opposite to that of the swirling flow 40. The groove side surfaces 34B extend vertically and upwardly from the opposite side edges of the groove bottom surface 32B. The groove side surfaces 34B diverge in a direction away from the connecting hole 26. At the opposite side edges of the groove 36B, ribs 42 are provided to extend upwardly from the upper surface of the bottom wall of the lower chamber insert. The inside surfaces of the ribs 42 and the groove side surfaces 34B are in the same planes and define fuel diffusion preventing surfaces. The injection axis 28B of the fuel injection nozzle intersects the inside surface 30 of the side wall 22 of the lower chamber insert 12, and the geometric axis of refelection 38B is positioned downstream of the injection axis 28B with respect to the direction of the swirling flow 40 and is directed towards the connecting hole 26.

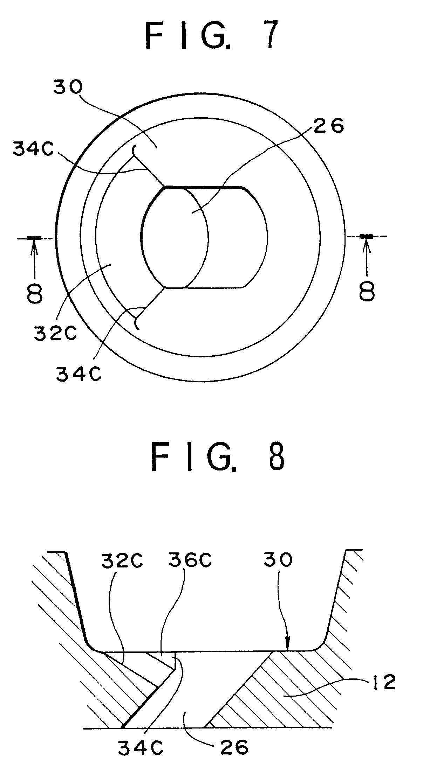

In a third embodiment, as illustrated in FIGS. 7 and 8, a groove 36C has a bottom surface 32C and side surfaces 34C. The groove bottom surface 32C is concave and part-conical, and the groove side surfaces 34C extend vertically and upwardly from the side edges of the groove bottom surface 32C to the upper surface of the bottom wall of the lower chamber insert 12. The groove side surfaces 34C function as fuel diffusion preventing surfaces. The groove side surfaces 34C diverge in the direction away from the connecting hole 26.

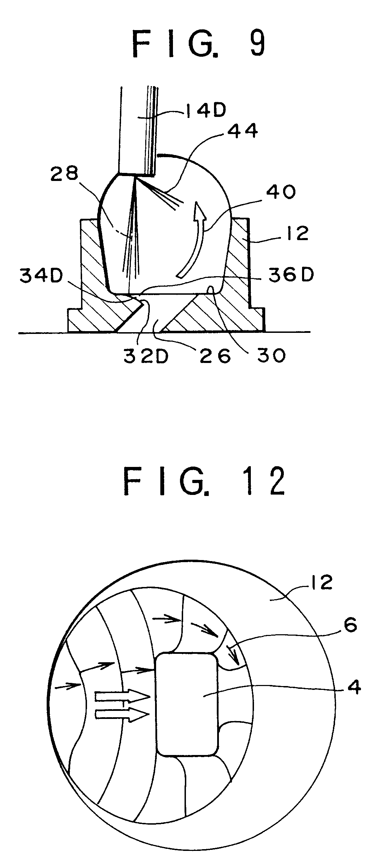

In a fourth embodiment, as illustrated in FIG. 9, the groove 36D has a bottom surface 32D and side surfaces 34D. The groove bottom surface 32D is upwardly convex in a plane including a swirl stream line 40. The groove side surfaces 34D extend vertically and upwardly from opposite side edges of the groove bottom surface 32D to the upper surface of the bottom wall of the lower chamber insert 12. The groove side surfaces 34D function as fuel diffusion preventing surfaces. The fuel injection nozzle 14D has two injection axes 28 and 44. One of the two injection axes is directed towards the groove bottom surface 32D of the groove 36D, and the other extends in a direction opposite to that of the swirling flow 40. Such a fuel injection nozzle having two injection axes may be applied to any of the embodiments of FIGS. 3, 4, and 5.

Operation of the swirl chamber structure of a diesel engine of the invention will now be explained.

First, operations common to all the embodiments will be explained. Since the lower chamber insert 12 has groove side surfaces 34 at the side edges of the groove bottom surface 32, fuel which is injected from the fuel injection nozzle 14 and adheres to the groove bottom surface 32 is prevented from spreading to all portions of the upper surface of the bottom wall of the lower chamber insert 12. If the fuel spread to all portions of the upper surface of the bottom wall of the lower chamber insert, a portion of the fuel would flow around the connecting hole 26 to the rear thereof. Fuel flowing to the rear of the connecting hole 26 would be pushed by the swirling flow in a direction away from the connecting hole 26 and would be prevented from flowing smoothly into the connecting hole 26. However, in accordance with the present invention, since fuel which collides with and adheres to the groove bottom surface 32, is guided by the groove side surfaces 34, it is prevented from spreading excessively. Thus, all the fuel can flow smoothly into the connecting hole 26. As a result, fuel flow from the swirl chamber 18 to the main chamber 24 is promoted and the fuel economy of the diesel engine is improved.

Further, since the inclination of the inside surface 30 of the lower chamber insert 12 at the intersection of the injection axis 28 with the inside surface 30, is such that the geometric axis 38 of reflection is positioned downstream of the injection axis 28 with respect to the direction of the swirling flow, fuel which collides with the inside surface 30 of the lower chamber insert 12 will be directed towards the connecting hole 26 by the inertial force of the injected fuel. Therefore, fuel adhering to the inside surface 30 flows in the same direction as the swirling flow to flow smoothly into the connecting hole 26. If there were no groove 36 in the swirl chamber structure of FIG. 1 and fuel was injected directly onto the upper surface of the bottom wall of the lower chamber insert, the fuel which collided with the surface would be directed in a direction opposite to that of the swirling flow and therefore would not flow smoothly into the connecting hole 26, so that fuel flow from the swirl chamber to the main chamber would be delayed. However, in accordance with the present invention, such a situation is obviated.

Further, since the intersection of the groove bottom surface 32 with the inside surface of the connecting hole 26 is a sharp edge, the air which flows from the main chamber to the swirl chamber when the associated piston moves upward, will suck a portion of the fuel adhering to the inside surface 30 of the lower chamber insert 12 so as to atomize the fuel.

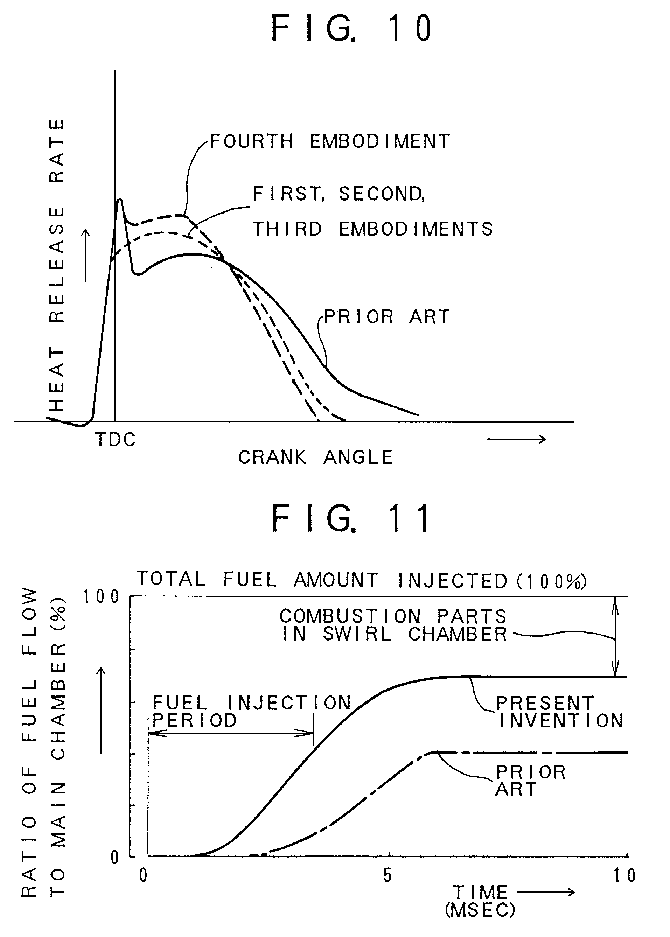

As a result, in accordance with the present invention, fuel flow into the connecting hole 26 and finally into the main chamber 24, is performed in a shorter period of time than in the prior art swirl chamber structure, as illustrated in FIG. 10, and the fuel economy of the engine is also improved.

Further, as illustrated in FIG. 11, since the amount of the fuel staying on the upper surface of the bottom wall of the lower chamber insert 12 is small, almost all the fuel injected from the fuel injection nozzle 14 can flow quickly into the main chamber 24, where the fuel can be completely burned when supplied with a sufficient amount of air which is sucked into the main chamber during the intake stroke of the engine. As a result, the heat generation rate, the combustion efficiency, and the hydrocarbon (HC) emission of the engine are improved.

Next, operations specific to each embodiment will be explained.

In the first embodiment, since the groove bottom surface 32A is flat, the groove can be relatively easily and exactly machined.

In the second embodiment, since the ribs 42 are provided, fuel is more positively contacted within the groove. Further, since the groove bottom surface 32B is convex in the longitudinal direction of the groove, the fuel spreads widely over the groove bottom surface 32B in the that direction of the groove and can be evenly mixed with air in the main chamber.

In the third embodiment, since the groove bottom surface 32C is part-coniccal and the groove side surfaces 34C diverge in the direction away from the connecting hole 26, the groove 36C can collect fuel injected onto the groove bottom surface 32C even if the flow pattern of the injected fuel spreads relatively widely. As a result, the fuel injection angle can be large so that the injected fuel is well atomized.

In the fourth embodiment, since the subsidiary injection 44 of the fuel injection nozzle 14D is directed in a direction opposite to the direction of the swirling flow 40, the fuel of the subsidiary injection is well atomized and is raised in temperature due to friction with the swirling flow. As a result, the fuel can ignite easily and the combustion time period is shortened. FIG. 10 shows the difference in the heat release rate between the fourth embodiment and the other embodiments of the invention. As seen from FIG. 10, the heat release rate of the fourth embodiment is better than those of the other embodiments of the invention.

In accordance with the present invention, the following advantages are obtained. Since the groove side surfaces 34 are formed in the lower chamber insert 12, fuel adhering to the inside surface 30 of the lower chamber insert 12 and flowing thereon is prevented from diffusing to all portions of the upper surface of the bottom wall of the lower chamber insert 12. Further, since the inclination of the fuel collision point at the inside surface 30 of the lower chamber insert 12, is determined so as to direct the fuel in the same direction as that of the swirling flow, the inertia of the injected fuel before it collides with the inside surface 30 of the lower chamber insert 12 cancels the fuel to be directed towards the connecting hole after collision with the inside surface 30, so that the fuel can flow smoothly into the connecting hole and finally into the main chamber 24. As a result, fuel combustion in the main chamber 24 is promoted and the fuel economy is improved.

## Claims

1. A cylinder head of a diesel engine, said head (10) having a lower surface and a concave recess (16) in said lower surface, which surface defines a main chamber (24) therebelow, said head comprising a swirl chamber (18) defined between the concave recess (16) in said cylinder head (10) and a lower chamber insert (12) inserted into said concave recess (16), the lower chamber insert (12) having a bottom wall (20), a side wall (22) and an inside surface (30), the bottom wall (20) having a connecting hole (26) therethrough for connecting the swirl chamber (18) to the main chamber (24) and a fuel injection nozzle (14) mounted in the cylinder head (10), the fuel injection nozzle (14) having an injection axis (28) directed towards the inside surface (30) of the lower chamber insert (12), wherein a groove (36, 36A, 36B, 36C, 36D) is formed in the lower chamber insert (12) and extends from a position in the vicinity of a point of intersection between the injection axis (28) of the fuel injection nozzle (14) and the inside surface (30) of the lower chamber insert (12), to the connecting hole (26), characterized in that:
the groove (36, 36A, 36B, 36C, 36D) has a bottom surface (32, 32A, 32B, 32C, 32D) extending obliquely downwardly towards the connecting hole (26) and side surfaces (34, 34A, 34B, 34C, 34D) extending upwardly from opposite side edges of the groove bottom surface (32, 32A, 32B, 32C, 32D),
the inside surface (30) of the lower chamber insert (12) where it is intersected by the injection axis (28) of the fuel injection nozzle (14), is inclined so that the geometric axis of reflection (38) thereat is positioned downstream of the injection axis (28) with respect to the direction of a swirling flow (40) generated in the swirl chamber (18), and
the groove side surfaces (34, 34A, 34B, 34C, 34D) are spaced sufficiently to allow all fuel injected from the fuel injection nozzle (18) directed towards said groove bottom surface (32, 32A, 32B, 32C, 32D) to collide with the groove bottom surface (32, 32A, 32B, 32C, 32D) between the groove side surfaces (34, 34A, 34B, 34C, 34D).

2. A cylinder head according to Claim 1, wherein the groove bottom surface (32A) is flat and extends straight towards the connecting hole (26) in the longitudinal direction of the groove (36A), and the groove side surfaces (34A) are parallel to each other.

3. A cylinder head according to Claim 1, wherein the groove bottom surface (32B) is upwardly convex in the lateral direction of the groove and the groove side surfaces (34B) diverge in the direction away from the connecting hole (26), and wherein ribs (42) which extend upwardly from an upper surface of the bottom wall of the lower chamber insert (12) are formed at opposite sides of the groove (36B), inside surfaces of the ribs (42) and the groove side surfaces (34B) being in the same planes.

4. A cylinder head according to claim 4, wherein the injection axis (28B) of the fuel injection nozzle is directed towards an inside surface of the side wall of the lower chamber insert (12).

5. A cylinder head according to claim 1, wherein the groove bottom surface (32C) is concave in the lateral direction of the groove (36C), and the groove side surfaces (34C) diverge in the direction away from the connecting hole (26).

6. A cylinder head according to claim 1, wherein the fuel injection nozzle (14D) comprises a fuel injection nozzle having two injection axes (28, 44).

7. A cylinder head according to claim 1, wherein the groove bottom surface (32D) is convex in the longitudinal direction of the groove (36D), and wherein the fuel injection nozzle (14D) has two injection axes (28, 44), one of which is directed in a direction opposite to that swirling flow (40) generated in the swirl chamber (18).

## Patentansprüche

1. Zylinderkopf eine Dieselmotors, wobei der Kopf (10) eine untere Fläche und in der unteren Fläche eine konkave Aussparung (16) hat, wobei die Fläche unter diesem eine Hauptkammer (24) definiert, wobei der Kopf eine Wirbelkammer (18) aufweist, die zwischen der konkaven Aussparung (16) im Zylinderkopf (10) und einem unteren Kammereinsatzstück (12) definiert ist, das in die konkave Aussparung (16) eingeführt ist, wobei das untere Kammereinsatzstück (12) eine untere Wand (20), eine Seitenwand (22) und eine Innenfläche (30) hat, die untere Wand (20) ein Verbindungsloch (26) durch diese hindurch zum verbinden der Wirbelkammer (18) mit der Hauptkammer (24) hat und eine Kraftstoffeinspritzdüse (14) im Zylinderkopf (10) montiert ist, wobei die Kraftstoffeinspritzdüse (14) eine Einspritzachse (28) hat, die zur Innenfläche (30) des unteren Kammereinsatzstücks (12) hin gerichtet ist und wobei eine Nut (36, 36A, 36B, 36C, 36D) im unteren Kammereinsatzstück (12) ausgebildet ist und sich von einer Position in der Nähe eines Schnittpunktes zwischen der Einspritzachse (28) der Kraftstoffeinspritzdüse (14) und der Innenfläche (30) des unteren Kammereinsatzstücks (12) zum verbindungsloch (26) erstreckt,
dadurch gekennzeichnet, daß
die Nut (36, 36A, 36B, 36C, 36D) eine untere Fläche (32, 32A, 32B, 32C, 32D), die sich zum Verbindungsloch (26) schräg nach unten erstreckt, und Seitenflächen (34, 34A, 34B, 34C, 34D) hat, die sich von entgegengesetzten Seitenkanten der unteren Nutfläche (32, 32A, 32B, 32C, 32D) nach oben erstrecken,
die Innenfläche (30) des unteren Kammereinsatzstücks (12), dort wo diese von der Einspritzachse (28) der Kraftstoffeinspritzdüse (14) geschnitten wird, geneigt ist, so daß sich die geometrische Achse (38) der Reflexion an dieser in bezug auf die Richtung einer Wirbelströmung (40), die in der Wirbelkammer (18) erzeugt wird, stromabwärts von der Einspritzachse (28) befindet, und
die Nutseitenflächen (34, 34A, 34B, 34C, 34D) ausreichend beabstandet sind, um zu gestatten, daß der gesamte Kraftstoff, der von der Kraftstoffeinspritzdüse (18) eingespritzt wird, die zur unteren Nutfläche (32, 32A, 32B, 32C, 32D) hin gerichtet ist, zwischen den Nutseitenflächen (34, 34A, 34B, 34C, 34D) auf die untere Nutfläche (32, 32A, 32B, 32C, 32D) auftrifft.

2. Zylinderkopf nach Anspruch 1, wobei die untere Nutfläche (32A) flach ist und sich in Längsrichtung der Nut (36A) zum Verbindungsloch (26) gerade erstreckt und die Nutseitenflächen (34A) zueinander parallel sind.

3. Zylinderkopf nach Anspruch 1, wobei die untere Nutfläche (32B) in Seitenrichtung der Nut nach oben konvex ist und die Nutseitenflächen (34B) in Richtung vom Verbindungsloch (26) weg auseinandergehen und wobei die Rippen (42), die sich von einer oberen Fläche der unteren Wand des unteren Kammer-einsatzstücks (12) nach oben erstrecken, an entgegengesetzten Seiten der Nut (36B) ausgebildet sind, wobei die Innenflächen der Rippen (42) und die Nutseitenflächen (34B) in gleichen Ebenen liegen.

4. Zylinderkopf nach Anspruch 4, wobei die Einspritzachse (28B) der Kraftstoffeinspritzduse zu einer Innenfläche der Seitenwand des unteren Kammereinsatzstucks (12) hin gerichtet ist.

5. Zylinderkopf nach Anspruch 1, wobei die untere Nutfläche (32C) in Seitenrichtung der Nut (36C) konkav ist und die Nutseitenflächen (34C) in Richtung vom Verbindungsloch (26) weg auseinandergehen.

6. Zylinderkopf nach Anspruch 1, wobei die Kraftstoffeinspritzdüse (14D) eine Kraftstoffeinspritzdüse aufweist, die zwei Einspritzachsen (28, 44) hat.

7. Zylinderkopf nach Anspruch 1, wobei die untere Nutfläche (32D) in Längsrichtung der Nut (36D) konvex ist und wobei die Kraftstoffeinspritzdüse (14D) zwei Einspritzachsen (28, 44) hat, wobei eine von diesen in eine Richtung entgegengesetzt zu der Wirbelströmung (40), die in der Wirbelkammer (18) erzeugt wird, gerichtet ist.

## Revendications

1. Culasse d'un moteur diesel, ledit cylindre (10) comportant une surface inférieure et un évidement concave (16) ménagé dans ladite surface inférieure, laquelle surface définit une chambre principale (24) formée en-dessous de celle-ci, ladite culasse comprenant une chambre de tourbillonnement (18) définie entre l'évidement concave (16) formé dans ladite culasse (10) et un siège rapporté de soupape de chambre inférieure (12) inséré dans ledit évidement concave (16), le siège rapporté de soupape de chambre inférieure (12) comportant une paroi de fond (20), une paroi latérale (22) et une surface interne (30), la paroi de fond (20) comportant un trou de communication (26) la traversant pour relier la chambre de tourbillonnement (18) à la chambre principale (24) et un injecteur de carburant (14) monté dans la culasse (10), l'injecteur de carburant (14) comportant un axe d'injection (28) dirigé vers la surface interne (30) du siège rapporté de soupape de chambre inférieure (12), dans laquelle une gorge (36, 36A, 36B, 36C, 36D) est formée dans le siège rapporté de soupape de chambre inférieure (12) et s'étend depuis un emplacement situé au voisinage d'un point d'intersection entre l'axe d'injection (28) de l'injecteur de carburant (14) et la surface interne (30) du siège rapporté de soupape de chambre inférieure (12), vers le trou de communication (26), caractérisée en ce que :
la gorge (36, 36A, 36B, 36C, 36D) comporte une surface de fond (32, 32A, 32B, 32C, 32D) s'étendant obliquement vers le bas en direction du trou de communication (26) et des surfaces latérales (34, 34A, 34B, 34C, 34D) s'étendant vers le haut depuis des bords latéraux opposés de la surface de fond de gorge (32, 32A, 32B, 32C, 32D),
la surface interne (30) du siège rapporté de soupape de chambre inférieure (12) où elle est coupée par l'axe d'injection (28) de l'injecteur de carburant (14), est inclinée d'une manière telle que l'axe géométrique de réflexion (38) sur celui-ci est positionné en aval de l'axe d'injection (28) par rapport à la direction de l'écoulement tourbillonnaire (40) produit dans la chambre de tourbillonnement (18), et
les surfaces latérales de gorge (34, 34A, 34B, 34C, 34D) sont suffisamment espacées pour permettre que la totalité des carburants injectée à partir de l'injecteur de carburant (18) dirigés vers ladite surface de fond de gorge (32, 32A, 32B, 32C, 32D) de venir heurter la surface de fond de gorge (32, 32A, 32B, 32C, 32D) entre les surfaces latérales de gorge (34, 34A, 34B, 34C, 34D).

2. Culasse selon la revendication 1, dans laquelle la surface de fond de gorge (32A) est plate et s'étend droite en direction du trou de communication (26) suivant la direction longitudinale de la gorge (36A) et dans laquelle les surfaces latérales de gorge (34A) sont mutuellement parallèles.

3. Culasse selon la revendication 1, dans laquelle la surface de fond de gorge (32B) est convexe en direction du haut suivant la direction latérale de la gorge et dans laquelle les surfaces latérales de gorge (34B) divergent dans la direction s'écartant du trou de communication (26) et dans laquelle des nervures (42) qui s'étendent vers le haut depuis une surface supérieure de la paroi de fond du siège rapporté de soupape de chambre inférieure (12) sont formées au niveau des côtés opposés de la gorge (36B), les surfaces internes des nervures (42) et les surfaces latérales de gorge (34B) étant situées dans les mêmes plans.

4. Culasse selon la revendication 4, dans laquelle l'axe d'injection (28B) de l'injecteur de carburant est dirigé vers une surface interne de la paroi latérale du siège rapporté de soupape de chambre inférieure (12).

5. Culasse selon la revendication 1, dans laquelle la surface de fond de gorge (32C) est concave dans la direction latérale de la gorge (36C) et dans laquelle les surfaces latérales de gorge (34C) divergent dans la direction s'écartant du trou de communication (26).

6. Culasse selon la revendication 1, dans laquelle l'injecteur de carburant (14D) comprend un injecteur de carburant comportant deux axes d'injection (28, 44).

7. Culasse selon la revendication 1, dans laquelle la surface de fond de gorge (32D) est convexe dans la direction longitudinale de la gorge (36D) et dans laquelle l'injecteur de carburant (14D) comporte deux axes d'injection (28, 44) dont l'un est dirigé dans une direction opposée à celle de l'écoulement tourbillonnaire (40) généré dans la chambre de tourbillonnement (18).
